# EUROPEAN PATENT APPLICATION

(11) **EP 4 224 577 A1**
(43) Date of publication of application: **09.08.2023**
(21) Application number: 21875198.0
(22) Date of filing: 14.09.2021
(51) Int. Cl.: H01M 4/505, H01M 4/525

(54) **POSITIVE ELECTRODE ACTIVE MATERIAL FOR SECONDARY BATTERIES, AND SECONDARY BATTERY**

(30) Priority: 30.09.2020 JP 2020166185
(71) Applicant: Panasonic Intellectual Property Management Co., Ltd., Osaka-shi, Osaka 540-6207 (JP)
(72) Inventor: ZHANG, Jin, Osaka-shi, Osaka 540-6207 (JP); IKEUCHI, Issei, Osaka-shi, Osaka 540-6207 (JP); HIBINO, Mitsuhiro, Osaka-shi, Osaka 540-6207 (JP); NAKURA, Kensuke, Osaka-shi, Osaka 540-6207 (JP)
(74) Representative: Novagraaf International SA
(86) International application number: PCT/JP2021/033791
(87) International publication number: WO 2022/070896

(57) **Abstract**

A positive electrode active material for a secondary battery includes a lithium metal composite oxide having a crystal structure based on a rock salt structure belonging to a space group Fm-3m, wherein the lithium metal composite oxide includes Ti and a metal element M¹ other than Li and Ti. The metal element M¹ preferably further includes at least one selected from the group consisting of Fe, Ge, Si, and Ga.

## Description

### [Technical Field]

The present disclosure relates to a positive electrode active material for a secondary battery and a secondary battery.

### [Background Art]

Secondary batteries, particularly lithium ion secondary batteries, are expected as a power source for small consumer applications, power storage devices, and electric vehicles, because of their high output and high energy density. For positive electrode active materials of lithium ion secondary batteries, a composite oxide of lithium and a transition metal (e.g., cobalt) is used. A high capacity can be achieved by replacing a portion of cobalt with nickel.

Meanwhile, recently, with a demand for a high energy density, a Li-excessive lithium metal composite oxide based on a rock salt structure Li₁₊ₓMn₁₋ₓO₂ has been gaining attention.

Patent Literature 1 has disclosed a positive electrode active material including a lithium transition metal composite oxide having a crystal structure belonging to a space group Fm-3m and represented by a composition formula Li₁₊ₓNb_{y}Me_{z}AₚO₂ (Me is a transition metal including Fe and/or Mn, 0 < x < 1, 0 < y< 0.5, 0.25 ≤ z < 1, A is an element other than Nb and Me, 0 ≤ p ≤ 0.2, where Li₁₊ₚFe_{1-q}Nb_{q}C₂ (0.15 < p ≤ 0.3, 0 < q ≤ 0.3) is excluded).

### [Citation List]

### [Patent Literature]

Patent Literature 1: Japanese Patent No. 6197029

### [Summary of Invention]

In Patent Literature 1, a high capacity is allowed by controlling the composition (that is, addition of Nb). However, the improvement in capacity is insufficient, and there is still room for improvement.

In view of the above, an aspect of the present disclosure relates to a positive electrode active material for a secondary battery including a lithium metal composite oxide having a crystal structure based on a rock salt structure belonging to a space group Fm-3m, wherein the lithium metal composite oxide includes Ti and a metal element M¹ other than Li and Ti.

Another aspect of the present disclosure relates to a secondary battery including a positive electrode, a negative electrode, an electrolyte, and a separator interposed between the positive electrode and the negative electrode, wherein the positive electrode includes the positive electrode active material for a secondary battery described above.

The present disclosure allows for a high energy density secondary battery.

### [Brief Description of Drawings]

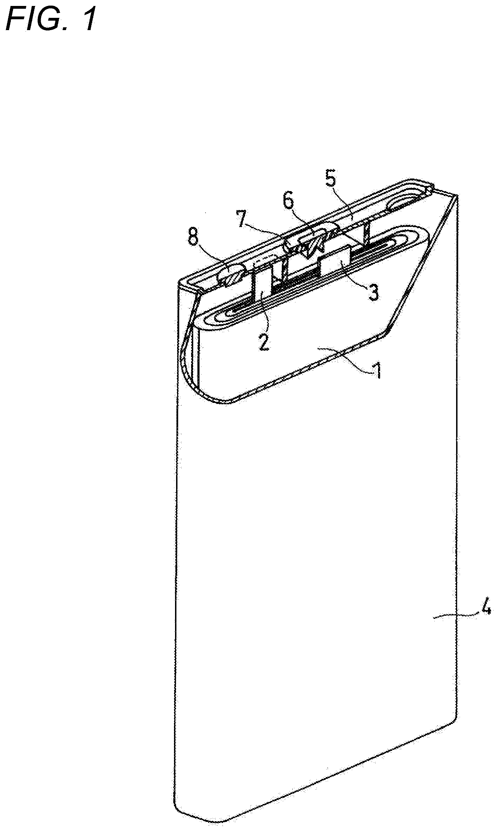

[FIG.1] FIG.1 is a schematic perspective partially cutaway view of a secondary battery according to an embodiment of the present disclosure.

### [Description of Embodiments]

The positive electrode active material for a secondary battery of the embodiment of the present disclosure includes a lithium metal composite oxide having a crystal structure based on a rock salt structure belonging to a space group Fm-3m. That is, the lithium metal composite oxide has a crystal structure similar to a rock salt structure belonging to the space group Fm-3m. The lithium metal composite oxide includes Ti, and a metal element M¹ other than Li and Ti.

The above-described lithium metal composite oxide has a crystal structure based on a rock salt structure represented by, for example, NaCl, and may have a structure in which an oxygen atom is disposed at an anion site and a Li atom and a metal atom other than Li (including Ti and metal element M¹) are randomly disposed at a cation site.

By including Ti, the lithium metal composite oxide having the above-described crystal structure increases its capacity. The reasons are unclear, but a factor may be as follows: in a lithium metal composite oxide, Ti is present in a form of Ti⁴⁺ where d-orbitals are unoccupied, and therefore the highly symmetric rock salt structure tends to be stable. Meanwhile, when at least one of the d-orbitals is occupied by electrons, the energy levels of the d-orbitals (e.g., where electrons are arranged as (t_{2g})³(e_{g})¹, (t_{2g})⁶(e_{g})¹, or such an electron arrangement may be made as a perturbation state) can split, with a local structure being less symmetric than the rock salt structure. The electrons can occupy the orbital of the lower energy level, which may stabilize the crystal structure less symmetric than the rock salt structure. However, because d-orbitals of Ti⁴⁺ are empty, the symmetry of the rock salt structure is hardly reduced, and even with a repetitive charge/discharge, the rock salt structure can be stabilized.

Preferably, the metal element M¹ includes at least one selected from the group consisting of Fe, Ge, Si, and Ga. In this case, the average discharge potential can be increased.

In the above-described crystal structure, the cation site may have a vacancy to which no Li atom or metal atom (atoms of transition metal element M¹ and metal element M²) is disposed. Here, having a vacancy means that in a positive electrode active material taken out from a disassembled secondary battery immediately after production or in a discharged state, a vacancy that is not occupied with a Li atom or metal atom is present in the lithium metal composite oxide . The ratio of the vacancies may be 0.5% or more, preferably 1% or more, more preferably 2 % or more of the sites in the crystal structure to which a lithium atom or metal atom may be disposed. The vacancies allow for lithium ions to move easily through them, and further improves the capacity.

The lithium metal composite oxide may include fluorine (F). Fluorine can replace the oxygen atom in the anion site in the above-described crystal structure. This stabilizes the Li-excessive state, and a high capacity can be achieved. The replacement with fluorine atoms also increases the average discharge potential. The Li-excessive state means that the number of Li atoms in the composite oxide is larger than the number of the transition metal atoms.

In the above-described lithium metal composite oxide, Li atoms are randomly placed in the cation sites, and the Li bonding state is various; therefore, the voltage distribution involved with the Li release is wide. Therefore, end portion of the low potential side in the voltage distribution may be difficult to be used for a capacity. However, introduction of fluorine atoms allows for the voltage distribution involved with the Li release to move toward the high potential side, and this allows for the end portion to be easily used for a capacity. In this way, available capacity increases even more.

Preferably, the lithium metal composite oxide includes Mn as the transition metal element M¹. The molar ratio of Mn in the lithium-containing composite oxide may be larger than the molar ratio of a total of Ti and the metal element M¹ excluding Mn. That is, the lithium metal composite oxide may be based on a composite oxide of Li and Mn. Examples of the composite oxide of Li and Mn include Li₁₊ₓMn₁₋ₓO₂.

Examples of the lithium metal composite oxide include those represented by a composition formula LiₐMn_{b}Ti_{c}M²_{d}O₂₋ₑFₑ (where 0 < a ≤ 1.35, 0.4 ≤ b ≤ 0.9, 0 < c ≤ 0.15, 0 ≤ d ≤ 0.1, 0 ≤ e ≤ 0.66, 1.75 ≤ a+b+c +d ≤ 2 are satisfied). Here, M² includes an element excluding Mn from the above-described metal element M¹. The Ti ratio c is more preferably 0.025 ≤ c ≤ 0.1, even more preferably 0.025 ≤ c ≤ 0.075.

In the above-described composition formula, x represented by 2-a-b-c-d (= x) represents a molar ratio of vacancies present in the cation sites. Based on the above-described composition formula, the molar ratio x of the vacancies is 0 ≤ x ≤ 0.25. Preferably, the molar ratio x of the vacancies is x ≥ 0.02, more preferably x ≥ 0.05, even more preferably x ≥ 0.1. In other words, a+b+c+d ≤ 1.98 is preferable, a+b+c+d ≤ 1.95 is more preferable, and a+b+c+d ≤ 1.9 is even more preferable. More preferably, the molar ratio x of the vacancies is x ≤ 0.15 (a+b+c+d ≥ 1.85).

The vacancy and the vacancy content can be determined based on the crystal structure and the composition of the lithium metal composite oxide. For example, in the case of a crystal structure similar to the rock salt structure belonging to the space group Fm-3m, the vacancy content is determined by identifying the composition of the lithium metal composite oxide, and calculating x = 2-a-b-c-d from the composition formula. The crystal structure of the lithium metal composite oxide is identified based on an X-ray diffraction pattern analyzed with a powder X-ray diffraction device (e.g., desktop X-ray diffraction device manufactured by Rigaku Corporation, MiniFlex, X-ray source: CuKα). The composition of the lithium metal composite oxide can be measured with an ICP emission spectroscopy device (iCAP6300 manufactured by Thermo Fisher Scientific).

The vacancy and the vacancy content can be evaluated also by a method using positron annihilation.

As shown in the above-described composition formula, a portion of the oxygen atoms in the anion sites may be replaced with fluorine atoms. In this manner, the state where Li is excessive (a > 1) is stabilized, and a high capacity can be achieved. Furthermore, as described, the average discharge potential increases, and available capacity can be further increased. When a portion of oxygen atoms is replaced with fluorine atoms, the fluorine atom replacement ratio e in the composition formula of the lithium metal composite oxide may be 0.1 ≤ e ≤ 0.58, 0.1 ≤ e ≤ 0.5, or 0.2 ≤ e ≤ 0.5.

The lithium metal composite oxide may include an element M² other than Li, Mn, and Ti. The lithium metal composite oxide may include, as the metal element M², at least one selected from the group consisting of Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Sm, Eu, Dy, and Er. Among these, in terms of a high average discharge potential, the lithium metal composite oxide preferably includes at least one selected from the group consisting of Fe, Ge, Si, and Ga as the metal element M².

The above-described lithium metal composite oxide can be synthesized by, for example, mixing lithium fluoride (LiF), an oxide of the element M¹ (e.g., lithium manganate (LiMnO₂) belonging to the space group Fm-3m), and an oxide of the element M² in an inert gas atmosphere such as Ar with a planetary ball mill. For the raw materials, Li₂O and Mn₂O₃ can be used. In addition to the above-described raw material, by adding lithium peroxide (Li₂O₂) and mixing, a lithium metal composite oxide having voids can be synthesized. Instead of the planetary ball mill, a mixer that can give a similar shearing force in mixing to powder can be used, or the powder can be heated during the mixing. The composition of the composite oxide can be adjusted to a target range by changing, for example, the mixing ratio of LiF to LiMnO₂, and mixing conditions (number of revolutions, mixing time, mixing temperature, etc.).

Next, a secondary battery of the embodiment of the present disclosure is described. The secondary battery includes, for example, the following positive electrode, negative electrode, electrolyte, and separator.

### [Positive Electrode]

The positive electrode has a positive electrode current collector and a positive electrode mixture layer formed on a surface of the positive electrode current collector and having a positive electrode active material. For the positive electrode, the above-described positive electrode for a secondary battery is used. The positive electrode mixture layer can be formed, for example, by applying a positive electrode slurry on a surface of the positive electrode current collector, and drying the slurry; in the positive electrode slurry, a positive electrode mixture including a positive electrode active material and a binder and the like is dispersed in a dispersion medium. The dried coating film may be rolled, if necessary. The positive electrode mixture layer may be formed on one surface of the positive electrode current collector, or may be formed on both surfaces thereof.

The positive electrode mixture layer contains a positive electrode active material as an essential component, and as an optional component, a binder, a conductive material, a thickener, a positive electrode additive and the like can be contained. For the binder, thickener, and conductive material, known materials can be used.

The positive electrode active material includes the above-described lithium metal composite oxide having a crystal structure similar to the rock salt structure belonging to the space group Fm-3m. The composite oxide is, for example, secondary particles composed of a plurality of coagulated primary particles. The primary particles have a particle size of, generally 0.05 µm to 1 µm. The composite oxide has an average particle size of, for example, 3 µm to 30 µm, preferably 5 µm to 25 µm. Here, the average particle size of the composite oxide means a median diameter (D50) at which cumulative frequency is 50% in a volume-based particle size distribution measured with a laser diffraction particle size distribution analyzer.

The amount of the elements contained and forming the composite oxide can be measured by an inductively coupled plasma emission spectroscopic analyzer (ICP-AES), electron probe micro analyzer (EPMA), energy dispersive X-ray analyzer (EDX), etc.

For the positive electrode active material, known lithium metal oxides other than the lithium metal composite oxide as described above may be mixed with the above-described lithium metal composite oxide having a crystal structure similar to the rock salt structure. Examples of the other lithium metal oxide include a lithium transition metal composite oxide such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. Note that the value "a" indicating the molar ratio of lithium is increased or decreased by charging and discharging.

The shape and thickness of the positive electrode current collector can be selected from the shapes and ranges according to the negative electrode current collector. Examples of the material for the positive electrode current collector include stainless steel, aluminum, aluminum alloy, titanium, or the like.

### [Negative Electrode]

The negative electrode has, for example, a negative electrode current collector, and a negative electrode active material layer formed on a surface of the negative electrode current collector. The negative electrode active material layer can be formed, for example, by applying a negative electrode slurry on a surface of the negative electrode current collector and drying the slurry; in the negative electrode slurry, a negative electrode mixture including a negative electrode active material and a binder and the like is dispersed in a dispersion medium. The dried coating film may be rolled, if necessary. That is, the negative electrode active material can be a mixture layer. A lithium metal foil or a lithium alloy foil may be attached to the negative electrode current collector. The negative electrode active material layer may be formed on one surface of the negative electrode current collector, or may be formed on both surfaces thereof.

The negative electrode active material layer contains a negative electrode active material as an essential component, and as an optional component, a binder, a conductive material, a thickener, and the like can be contained. For the binder, conductive material, and thickener, known materials can be used.

The negative electrode active material contains a material that electrochemically stores and releases lithium ions, a lithium metal, and/or a lithium alloy. For the material that electrochemically stores and releases lithium ions, a carbon material, an alloy based material, and the like are used. Examples of the carbon material include graphite, graphitizable carbon (soft carbon), and non-graphitizable carbon (hard carbon). Preferred among them is graphite, which is excellent in stability during charging and discharging and has a small irreversible capacity. For the alloy based material, a material containing at least one metal that forms an alloy with lithium can be used, and examples thereof include silicon, tin, a silicon alloy, a tin alloy, and a silicon compound. Silicon oxides or tin oxides of these bonded with oxygen or the like can be used.

For the alloy based material containing silicon, for example, a silicon composite material in which a lithium ion conductive phase and silicon particles dispersed in the lithium ion conductive phase can be used. For the lithium ion conductive phase, for example, a silicon oxide phase, a silicate phase, and/or a carbon phase can be used. A main component (e.g., 95 to 100 mass%) of the silicon oxide phase can be silicon dioxide. Among these, a composite material composed of a silicate phase and silicon particles dispersed in the silicate phase is preferable because it has a high capacity and a small irreversible capacity.

The silicate phase may include, for example, at least one selected from the group consisting of a Group 1 element and a Group 2 element of the long-form periodic table. Examples of the Group 1 element and Group 2 element of the long-form periodic table include lithium (Li), potassium (K), sodium (Na), magnesium (Mg), calcium (Ca), strontium (Sr), barium (Ba), and the like. Other elements may include aluminum (Al), boron (B), lanthanum (La), phosphorus (P), zirconium (Zr), titanium (Ti), etc. In particular, the silicate phase containing lithium (hereinafter also referred to as a lithium silicate phase) is preferable because of its small irreversible capacity and high initial charge/discharge efficiency.

The lithium silicate phase may be any oxide phase containing lithium (Li), silicon (Si), and oxygen (O), and may include other elements. The atomic ratio O/Si of O to Si in the lithium silicate phase is, for example, larger than 2 and less than 4. Preferably, O/Si is larger than 2 and less than 3. The atomic ratio Li/Si of Li to Si in the lithium silicate phase is, for example, larger than 0 and less than 4. The lithium silicate phase may have a composition represented by the formula: Li_{2z}SiO_{2+z} (0 < z < 2). Preferably, the relation 0 < z < 1 is satisfied, and z = 1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase can be composed of, for example, amorphous carbon which is less crystalline. The amorphous carbon may be, for example, hard carbon, soft carbon, or something else.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy, or the like can be exemplified.

### [Electrolyte]

The electrolyte includes a solvent and a solute dissolved in the solvent. The solute is an electrolytic salt that goes through ion dissociation in the electrolyte. The solute may include, for example, a lithium salt. The electrolyte component other than the solvent and solute is additives. The electrolyte may include various additives. The electrolyte is generally used in a liquid state, but may be in a state where its flowability is restricted with a gelling agent and the like.

For the solvent, an aqueous solvent or a non-aqueous solvent is used. As the non-aqueous solvent, a cyclic carbonic acid ester, a chain carbonic acid ester, a cyclic carboxylic acid ester, and a chain carboxylic acid ester are exemplified. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), ethyl propionate (EP), and the like. A kind of non-aqueous solvent may be used singly, or two or more kinds thereof may be used in combination.

Examples of the non-aqueous solvent also include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl-furan, 1,8-cineol, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxyethane, 1,2-dibutoxy ethane, diethylene glycol dimethylether, diethylene glycol diethyl ether, diethylene glycol dibutyl ether, 1,1-dimethoxy methane, 1,1-diethoxy ethane, triethylene glycol dimethylether, tetraethylene glycol dimethyl ether, and the like.

These solvents may be a fluorinated solvent in which hydrogen atoms are partly substituted with a fluorine atom. Fluoro ethylene carbonate (FEC) may be used as the fluorinated solvent.

For the lithium salt, for example, lithium salts of chlorine-containing acid (LiClO₄, LiAlCl₄, LiB₁₀Cl₁₀, etc.), lithium salts of fluorine-containing acid (LiPF₆, LiPF₂O₂, LiBF₄, LiSbF₆, LiAsF₆, LiCF₃SO₃, LiCF₃CO₂, etc.), lithium salts of fluorine-containing acid imide (LiN(FSO₂)₂, LiN(CF₃SO₂)₂, LiN(CF₃SO₂)(C₄F₉SO₂), LiN(C₂F₅SO₂)₂, etc.), lithium halides (LiCl, LiBr, LiI, etc.) and the like can be used. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. With the lithium salt concentration set to be within the above-described range, an electrolyte having an excellent ion conductivity and a suitable viscosity can be prepared. However, the lithium salt concentration is not limited to the above-described range.

The electrolyte may contain other known additives. Examples of the additive include 1,3-propanesultone, methylbenzenesulfonate, cyclohexylbenzene, biphenyl, diphenyl ether, and fluorobenzene.

### [Separator]

A separator is interposed between the positive electrode and the negative electrode. The separator has excellent ion permeability, and suitable mechanical strength and electrically insulating properties. As the separator, a microporous thin film, a woven fabric, a nonwoven fabric, and the like may be used. The separator is preferably made of polyolefin such as polypropylene and polyethylene.

In an example structure of the secondary battery, an electrode group and a non-aqueous electrolyte are accommodated in an outer package, and the electrode group has a positive electrode and a negative electrode wound with a separator interposed therebetween. Alternatively, instead of the wound-type electrode group, other forms of electrode groups may be applied, such as a laminated electrode group in which a positive electrode and a negative electrode are laminated with a separator interposed therebetween. The secondary battery may be any shape, for example, a cylindrical type, a rectangular type, a coin-type, a button type, or a laminate type.

FIG.1 is a schematic perspective partially cutaway oblique view of a prismatic secondary battery according to an embodiment of the present disclosure.

The battery includes a bottomed rectangular battery case 4, and an electrode group 1 and a non-aqueous electrolyte accommodated in the battery case 4. The electrode group 1 has a negative electrode in the form of a long strip, a positive electrode in the form of a long strip, and a separator interposed therebetween. A negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. A positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for a non-aqueous electrolyte, and is sealed with a sealing plug 8 after injection.

The structure of the secondary battery may be cylindrical, coin-shaped, button-shaped, or the like having a metallic battery case, or may be a laminated battery having a laminated sheet battery case made of a laminated body of a barrier layer and a resin sheet. In the present disclosure, the type, shape, and the like of the secondary battery are not particularly limited.

In the following, the present disclosure will be described in detail based on Examples and Comparative Examples, but the present disclosure is not limited to Examples below.

### <Examples 1 to 7>

### [Positive Electrode Production]

Lithium fluoride (LiF), lithium peroxide (Li₂O₂), lithium manganate (LiMnO₂), and titanium oxide (TiO₂) were mixed at a predetermined mass ratio. The mixed powder was introduced into a planetary ball mill (Premium-Line P7 manufactured by Fritsch, number of revolution:600 rpm, vessel:45 mL, balls: Zr made balls with φ 5 mm), and subjected to a treatment in an Ar atmosphere at room temperature for 35 hours (35 cycles of 1 hour treatment and 10 minutes rest), thereby producing a lithium metal composite oxide having a predetermined composition.

The produced lithium metal composite oxide, acetylene black, and polyvinylidene fluoride were mixed at a solid content mass ratio of 7:2:1, and using N-methyl-2-pyrrolidone (NMP) as a dispersion medium, a positive electrode mixture slurry was prepared. Then, the positive electrode mixture slurry was applied onto a positive electrode core composed of aluminum foil, the coating film was dried and rolled, and then cut into a predetermined electrode size, thereby producing a positive electrode.

In Examples 1 to 7, lithium metal composite oxides X1 to X7 having different compositions were synthesized in this manner, and positive electrodes using the lithium metal composite oxides X1 to X7 were produced.

In Examples 3 and 4, iron oxide (Fe₂O₃) was further added to the above-described raw material at a predetermined mass ratio and mixed, and the lithium metal composite oxides X3 and X4 were produced.

In Example 5, silicon oxide (SiO₂) was further added to the above-described raw material at a predetermined mass ratio and mixed, and the lithium metal composite oxide X5 was produced.

In Examples 6 and 7, germanium oxide (GeO₂) was further added to the above-described raw material at a predetermined mass ratio and mixed, and the lithium metal composite oxides X6 and X7 were produced respectively.

### [Electrolyte preparation]

To a solvent mixture in which ethylene carbonate (EC), ethyl methyl carbonate (EMC), and dimethyl carbonate (DMC) were mixed at a predetermined volume ratio, LiPF₆ was added as a lithium salt, thereby preparing a non-aqueous electrolyte.

### [Test cell production]

Using the above-described positive electrode and a negative electrode counter electrode composed of lithium metal foil, a test cell was produced. An electrode body was composed by placing the above-described positive electrode to face the negative electrode counter electrode with a separator interposed therebetween, and the electrode body was accommodated in a coin-shape outer can. After injecting the electrolyte to the outer can, the outer can was sealed, thereby producing a coin-shaped test secondary battery.

Using the positive electrode in which the lithium metal composite oxides X1 to X7 were used for the positive electrode active material, secondary batteries A1 to A7 were respectively produced. The secondary batteries A1 to A7 correspond to Examples 1 to 7.

### <Comparative Examples 1 and 2>

In production of the positive electrode, lithium fluoride (LiF), and lithium manganate (LiMnO₂) were mixed at a predetermined mass ratio. The mixed powder was introduced into a planetary ball mill in the same manner as in Example 1, and subjected to a treatment in an Ar atmosphere at room temperature, thereby producing a lithium metal composite oxide Y1 having a predetermined composition (Comparative Example 1).

In Comparative Example 2, iron oxide (Fe₂O₃) was further added to the above-described raw material at a predetermined mass ratio and mixed, thereby producing a lithium metal composite oxide Y2.

Using the produced lithium metal composite oxides Y1 and Y2, a positive electrode was produced in the same manner as in Example 1, thereby producing test secondary batteries B1 and B2, respectively.

### <Comparative Examples 3 and 4>

In production of the positive electrode, lithium peroxide (Li₂O₂), lithium fluoride (LiF), lithium manganate (LiMnO₂), and silicon oxide (SiO₂) were mixed at a predetermined mass ratio. The mixed powder was introduced into a planetary ball mill in the same manner as in Example 1, and subjected to a treatment in an Ar atmosphere at room temperature, thereby producing a lithium metal composite oxide Y3 having a predetermined composition (Comparative Example 3).

In Comparative Example 4, in the above-described raw material, germanium oxide (GeO₂) was added instead of silicon oxide (SiO₂) at a predetermined mass ratio and mixed, thereby producing a lithium metal composite oxide Y4.

Using the produced lithium metal composite oxides Y3 and Y4, a positive electrode was produced in the same manner as in Example 1, thereby producing test secondary batteries B3 and B4, respectively.

The lithium metal composite oxides X1 to X7, and Y1 to Y4 were subjected to an X-ray diffraction pattern measurement and analysis with a powder X-ray diffraction device, and it was determined that the composite oxide had a crystal structure based on rock salt type belonging to the space group Fm-3m from the number of XRD peak and the peak position.

### [Evaluation]

### (Initial discharge capacity)

The secondary battery was subjected to constant current charging under a normal temperature environment at a constant current of 0.05 C until reaching a battery voltage of 4.95 V. Afterwards, the batteries were allowed to rest for 20 minutes, and subjected to constant current discharge at a constant current of 0.2 C until reaching a battery voltage of 2.5 V, and the discharge capacity was measured. The discharge capacity per mass of the positive electrode active material (lithium metal composite oxide) was determined, and set as the initial discharge capacity C₀.

### (Average discharge voltage)

In the above-described initial discharge capacity measurement, the average battery voltage over time was determined based on the change of the battery voltage over time during constant current discharging, and regarded as an average discharge voltage V₀.

Table 1 shows the evaluation results of the initial discharge capacity C₀ and the average discharge voltage V₀ along with the composition of the lithium metal composite oxide used as the positive electrode active material in the battery.

As shown in Table 1, the batteries A1 to A7 of Examples 1 to 7 contained Ti in the lithium metal composite oxide, and therefore the initial discharge capacity improved, as compared with the batteries B 1 to B4 of Comparative Examples 1 to 4 containing no Ti.

In the batteries A3 to A7, Fe, Si, Ge were included to the lithium metal composite oxide in addition to Ti. Although the initial discharge capacity was slightly reduced, in the batteries A3 to A7, a tendency where the average discharge voltage increased can be seen. Meanwhile, as shown with the batteries B2 to B4, when the lithium metal composite oxide contained no Ti but included Fe, Si, or Ge singly, no effects of the average discharge voltage increase were seen.

**[Table 1]**

| Battery | Positive Electrode Active Material | Initial discharge capacity (mAh/g) | Average discharge Voltage (V) |
|---|---|---|---|
| | Composition | | |
| A1 | Li_{1.15}Mn_{0.75}Ti_{0.05}0_{1.7}F_{0.3} | 310 | 3.45 |
| A2 | Li_{1.14}Mn_{0.66}Ti_{0.10}O_{1.7}F_{0.3} | 307 | 3.39 |
| A3 | Li_{1.15}Mn_{0.70}Ti_{0.05}Fe_{0.05}O_{1.7}F_{0.3} | 301 | 3.49 |
| A4 | Li_{1.15}Mn_{0.775}Ti_{0.025}Fe_{0.025}O_{1.7}F_{0.3} | 297 | 3.51 |
| A5 | Li_{1.15}Mn_{0.70}Ti_{0.05} Si_{0.05}O_{1.7}F_{0.3} | 282 | 3.47 |
| A6 | Li_{1.15}Mn_{0.65}Ti_{0.05}Ge_{0.05}O_{1.7}F_{0.3} | 282 | 3.46 |
| A7 | Li_{1.15}Mn_{0.65}Ti_{0.075}Ge_{0.025}0_{1.7}F_{0.3} | 289 | 3.40 |
| B1 | Li_{1.28}Mn_{0.85}O_{1.7}F_{0.3} | 241 | 3.37 |
| B2 | Li_{1.16}Mn_{0.74}Fe_{0.10}O_{1.7}F_{0.3} | 265 | 3.36 |
| B3 | Li_{1.15}Mn_{0.65}Si_{0.10}O_{1.7}F_{0.3} | 206 | 3.28 |
| B4 | Li_{1.15}Mn_{0.65}Ge_{0.10}O_{1.7}F_{0.3} | 209 | 3.26 |

### [Industrial Applicability]

With the secondary battery of the present disclosure, a secondary battery with a high capacity and also with excellent cycle characteristics can be provided. The secondary battery according to the present disclosure is useful for a main power source of a mobile communication device, a portable electronic device, or the like.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug

## Claims

1. A positive electrode active material for a secondary battery comprising: a lithium metal composite oxide having a crystal structure based on a rock salt structure belonging to a space group Fm-3m, wherein
the lithium metal composite oxide includes Ti and a metal element M¹ other than Li and Ti.

2. The positive electrode active material for a secondary battery of claim 1, wherein the metal element M¹ includes at least one selected from the group consisting of Fe, Ge, Si, and Ga.

3. The positive electrode active material for a secondary battery of claim 1 or 2, wherein the lithium metal composite oxide has a vacancy at a cation site in the crystal structure.

4. The positive electrode active material for a secondary battery of any one of claims 1 to 3, wherein the lithium metal composite oxide includes fluorine.

5. The positive electrode active material for a secondary battery of any one of claims 1 to 4, wherein the metal element M¹ includes Mn, and
the molar ratio of Mn in the lithium metal composite oxide is larger than the molar ratio of a total of Ti and the metal element M¹ excluding Mn.

6. The positive electrode active material for a secondary battery of any one of claims 1 to 5, wherein the lithium metal composite oxide is represented by a composition formula LiₐMn_{b}Ti_{c}M²_{d}O₂₋ₑFₑ (where M² is at least one of the metal element M¹ excluding Mn, 0 < a ≤ 1.35, 0.4 ≤ b ≤ 0.9, 0 < c ≤ 0.15, 0 ≤ d ≤ 0.1, 0 ≤ e ≤ 0.66, 1.75 ≤ a + b + c +d ≤ 2 are satisfied).

7. The positive electrode active material for a secondary battery of claim 6, wherein in the lithium metal composite oxide, the element M² includes at least one selected from the group consisting of Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Sm, Eu, Dy, and Er.

8. A secondary battery comprising: a positive electrode, a negative electrode, an electrolyte, and a separator interposed between the positive electrode and the negative electrode, wherein
the positive electrode includes the positive electrode active material for a secondary battery of any one of claims 1 to 7.
